Europäisches Patentamt

(19) European Patent Office

Office européen des brevets

(11) Numéro de publication: **0 243 693**

**B1**

(12) **FASCICULE DE BREVET EUROPEEN**

(45) Date de publication du fascicule du brevet: 23.01.91

(51) Int. Cl.⁵: **G 01 B 5/00,** G 01 B 7/00

(21) Numéro de dépôt: 87104616.5

(22) Date de dépôt: 27.03.87

(54) **Dispositif de palpage pour un appareil autonome de mesure de grandeurs linéaires.**

(30) Priorité: 30.04.86 CH 1768/86

(43) Date de publication de la demande:
04.11.87 Bulletin 87/45

(45) Mention de la délivrance du brevet:
23.01.91 Bulletin 91/04

(84) Etats contractants désignés:
DE FR GB IT SE

(56) Documents cités:
FR-A-2 365 406
US-A-3 750 295
US-A-4 166 323

(73) Titulaire: TESA S.A.
Rue Bugnon 38
CH-1020 Renens (CH)

(72) Inventeur: Zanier, Adriano
Av. des Huttins 9
CH-1008 Prilly (CH)
Inventeur: Zufferey, Charles-Henri
Route de Chavannes 111
CH-1007 Lausanne (CH)

(74) Mandataire: Misrachi, Alfred
15, Ch. de la Plantaz
CH-1024 Ecublens (CH)

Courier Press, Leamington Spa, England.

**Description**

La présente invention a pour objet un dispositif de palpage pour un appareil de mesure de grandeurs linéaires destiné à mesurer par référence à un plan et selon un axe de mesure perpendiculaire à ce plan une pièce immobilisée par rapport audit plan, et comportant un coulisseau destiné à être monté mobile le long d'une glissière rectiligne de l'appareil de mesure qui est déplaçable sur le plan et orientée dans la direction de l'axe de mesure, un chariot déplaçable par translation dans cette même direction sur le coulisseau et à l'encontre des forces antagonistes de deux ressorts le maintenant en position de repos entre deux appuis fixes du coulisseau, un palpeur à touche de mesure lié spatialement aux déplacements du chariot sur le coulisseau et destiné à palper sous une force de palpage choisie un élément de la pièce à mesurer par déplacement du chariot à l'encontre de la force de réaction de l'un des deux ressorts, un détecteur des déplacements relatifs du chariot par rapport au coulisseau apte à délivrer des signaux représentatifs de ces déplacements en sens et en amplitude et significatifs des variations de la force de palpage, et un circuit électronique relié au détecteur et prévu pour contrôler un processus pré-établi de saisie de la mesure et de détection du point de rebroussement du palpeur lors du palpage des points diamétralement opposés d'un arbre ou d'un alésage de la pièce à mesurer en fonction des variations de l'amplitude relative des signaux du détecteur, et comportant un tableau signalétique de ces variations.

Un dispositif de palpage connu de ce genre est utilisé sur un appareil de mesure se référant à un plan de mesure constitué par une table et dont la glissière est implantée sur un socle à surface d'appui plane dans lequel est intégré un dispositif de sustentation à coussin d'air destiné à faciliter ses déplacements sur la table. Le déplacement vertical du coulisseau du dispositif de palpage le long de la glissière de l'appareil est obtenu par l'actionnement d'un volant moleté à manivelle pour une avance rapide et par un bouton moleté pour un réglage fin. Le palpeur du dispositif de palpage est fixé sur le chariot et le tableau signalétique des variations du signal du détecteur est constitué par un galvanomètre dont l'aiguille se déplace sur une échelle zonée et graduée permettant de visualiser quantitativement ces variations. Ce tableau est par ailleurs complété par une lampe témoin de confirmation de la saisie de la cote de l'élément palpé de la pièce et qui est en même temps significative par son allumage de l'atteinte ou du dépassement de la force de palpage choisie pour cette saisie.

Lors de l'application du processus de mesure du diamètre d'un arbre ou d'un alésage d'une pièce montée et immobilisée sur la table, la saisie de la cote des deux points diamètralement opposés de leur diamètre nécessite la recherche préalable de la position précise de chacun de ces deux points, dans le plan vertical de mesure, sur la surface courbe de ces éléments. Cette recherche se fait par exemple pour le point bas du diamètre d'un alésage, tout d'abord par déplacement sur coussin d'air de la colonne sur la table et par descente rapide du coulisseau à l'aide du volant jusqu'à appliquer à vue la touche du palpeur contre la surface cylindrique de l'alésage à proximité du point bas en question. Ensuite, et par actionnement du bouton de réglage fin, une force de palpage suffisante est appliquee par le palpeur sur la pièce sous le contrôle visuel de la position de l'aiguille sur l'échelle graduée du galvanomètre. Puis l'opérateur déplace latéralement la glissière et son socle sur la table pour rechercher le point bas du diamètre de l'alésage en contrôlant le mouvement de l'aiguille du galvanomètre qui, au passage de la touche sur ce point bas amorce un mouvement de rebroussement correspondant au rebroussement du palpeur sur la partie basse de la surface cylindrique de cet alésage. A ce moment la position du point de rebroussement de l'aiguille sur l'échelle graduée et zonée indique si la force de palpage est encore suffisante et l'opérateur corrige s'il y a lieu de le faire à l'aide du bouton de réglage fin. Enfin, une fois définie la position du point bas de l'alésage par ce moyen de contrôle du point de rebroussement du palpeur, la machine et la pièce immobilisées sur la table de mesure ne doivent plus être déplacées jusqu'au déclenchement de la prise de mesure. Celle-ci est obtenue par un surcroît d'actionnement du bouton de réglage fin pour augmenter la force de palpage jusqu'à la valeur choisie et préétablie dont l'atteinte est confirmée par la lampe-témoin.

Ce processus de prise de mesure, exécuté sous le contrôle du tableau signalétique informé par le circuit électronique relié au détecteur des déplacements du chariot sur le coulisseau du dispositif de palpage, est simple et fiable. Il permet un contrôle aisé et rapide des valeurs définissant la position du point de rebroussement du palpeur et la position relative de ce dernier par rapport au coulisseau dans la direction de l'axe de mesure.

L'invention a pour but d'augmenter la performance d'un appareil autonome de mesure équipé d'un dispositif de palpage du genre précité lors des prises de mesure des points diamètralement opposés d'un arbre ou d'un alésage.

A cet effet le dispositif de palpage selon l'invention est caractérisé en ce que le palpeur est fixé sur un support monté déplaçable sur le chariot par translation dans le plan de mesure et dans une direction perpendiculaire à celle des déplacements du chariot par rapport au coulisseau, et en ce que ce support comporte un dispositif de commande de ses déplacements et de son immobilisation sur le chariot.

De la sorte, dans l'application du processus de recherche du point de rebroussement du palpeur, l'opérateur une fois passé ce point de rebroussement et après avoir éventuellement corrigé la force de palpage en se guidant pour cela sur les indications du tableau signalétique, n'a plus qu'à actionner le dispositif de commande des déplacements du support du palpeur sur le chariot, en laissant le socle de la glissière et la pièce immobilisées sur la table de mesure, jusqu'à immobiliser également ce support au point recherché, sous le contrôle des indications fournies par le tableau signalétique.

La mobilité latérale supplémentaire du palpeur par rapport au chariot, orientée dans une direction perpendiculaire à celle des déplacements de ce dernier dans la direction de l'axe de mesure, n'affecte en rien la précision des mesures effectuées selon cet axe et influence le détecteur exactement comme la glissière et son socle le feraient lors de cette opération.

Dans le but de rendre encore plus aisés les manoeuvres de recherche et le contrôle du point de rebroussement, le concept de l'invention est caractérisé en ce que le palpeur est fixé sur un support monté déplaçable sur le chariot par translation dans le plan de mesure et dans une direction perpendiculaire à celle des déplacements du chariot par rapport au coulisseau, en ce que ce support comporte un dispositif de commande de ses déplacements et de son immobilisation sur le chariot, et en ce que le tableau signalétique des variations du signal en provenance du détecteur comporte quatre symboles géométriques différenciés par leur forme, leur orientation et/ou leur couleur, et dont l'éclairement, commandé par le circuit électronique relié au détecteur est significatif pour deux premiers d'entre eux du sens du déplacement du chariot sur le coulisseau dans la direction de l'axe de coordonnées, pour le troisième de l'arrivée dudit chariot dans une zone prédéterminée de ses déplacements dans chacun des deux sens de ceux-ci par rapport à sa position de repos, l'étendue de cette zone étant comprise dans une fourchette de valeurs de la force de palpage choisie pour la recherche du point de rebroussement, et pour le quatrième (51) de l'arrivée de ce même chariot et dans chacun des deux sens de ses déplacements à une position préétablie de déclenchement de la prise de mesure, hors de la zone susdite et correspondant à la force de palpage choisie pour ce déclenchement.

Comme il sera montré plus loin dans la description qui suit, le dispositif de commande des déplacements et de l'immobilisation du support sur le chariot peut être réalisé de diverses façons avec pour chacune d'elles un effet et un avantage particuliers.

Le dessin annexé représente, à titre d'exemples, un appareil de mesure équipé de l'objet de l'invention, une forme d'exécution de cet objet, et une variante d'un élément de cette forme d'exécution.

La figure 1 est une vue d'ensemble de l'appareil de mesure.

La figure 2 est une vue de profil en coupe axiale partielle du dispositif de palpage.

La figure 3 est une vue de face de ce dispositif.

La figure 4 en est une vue de dessus montrée en coupe selon l'axe de coupe I—I de la figure 1.

La figure 5 est un schéma illustrant une phase du processus de mesure appliqué.

La figure 6 est un schéma fonctionnel de son circuit électronique de contrôle.

La figure 7 est un schéma fonctionnel partiel illustrant la variante.

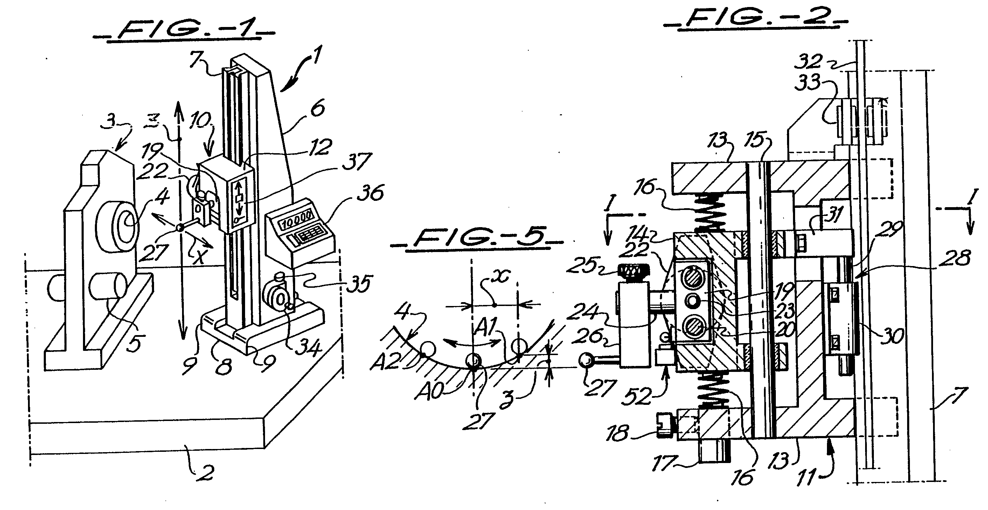

L'appareil de mesure 1 représenté figure 1 est une colonne autonome de mesure de grandeurs du type à un seul axe Z de mesure perpendiculaire à une table de mesure 2 sur laquelle est montée une pièce à mesurer 3 présentant un alésage 4 et un arbre 5.

Cette colonne comporte un bâti vertical 6 supportant une glissière rectiligne 7 orientée dans la direction de l'axe de mesure Z, implanté sur un socle 8 à surface d'appui plane perpendiculaire à la glissière 7 et présentant deux compartiments latéraux 9 dans lesquels est intégré un dispositif de sustentation à coussin d'air destiné à faciliter les déplacements de la colonne sur la table 2, lors des préliminaires d'approche de la pièce 3 en vue d'une prise de mesure.

Sur la glissière 7 est monté le dispositif de palpage 10 selon l'invention.

Ce dispositif de palpage, représenté en détails par les figures 2, 3 et 4, comporte un coulisseau 11 enfermé dans un boîtier 12 visible seulement sur la figure 1 et monté mobile par translation le long de la glissière 7. Ce coulisseau 11 comporte une partie creuse en forme de U couché entre les deux ailes horizontales 13 duquel est monté un chariot 14 déplaçable par translation dans la direction verticale de l'axe de coordonnées Z également et le long de deux colonnes cylindriques parallèles 15 implantées dans les deux ailes 13.

Le chariot 14 est maintenu en position de repos entre les deux ailes 13 du coulisseau par les forces antagonistes de deux ressorts de compression 16 montés en opposition de part et d'autre de ce chariot et en appui contre les ailes 13. La pression d'équilibrage de ces deux ressorts est rendue ici réglable dans une certaine mesure par un appui mobile 17 engagé dans un trou d'une aile 13 et qui est immobilisable en position choisie par le moyen d'une vis de pression 18.

Un contrepoids, non représenté, peut être ajouté à ce système d'équilibrage pour compenser l'inertie des masses suspendues entre les deux ressorts, ceci dans le but d'éviter toute oscillation éventuelle au point dur de repos. Mais un tel contrepoids n'est pas indispensable pour atteindre le but recherché.

Le chariot 14 ainsi monté sur le coulisseau 11 comporte une cavité parallélépipédique dans laquelle est monté un support 19 déplaçable par translation dans le plan vertical de mesure et dans une direction X (fig. 1) perpendiculaire à celle des déplacements du chariot par rapport au coulisseau, c'est-à-dire en fait perpendiculaire à l'axe de mesure Z.

A cet effet, le support 19 est monté coulissant le long de deux glissières cylindriques horizontales 20 implantées dans deux parois latérales 21 du chariot 14. Ce support 19 comporte un dispositif de commande de ses déplacements et de son immobilisation le long des glissières 20 constitué ici par un moteur électrique pas-à-pas 22 à deux sens de rotation entraînant une vis 23 en prise dans un trou fileté traversant ledit support, ce moteur étant fixé contre une paroi latérale 21 du chariot 14.

La paroi frontale libre du support 19 comporte un bras d'extension horizontal 24 sur lequel est fixé par une vis de serrage 25 un palpeur amovible 26 à touche de mesure sphérique 27.

Dans la partie arrière du coulisseau 11 opposée au palpeur 26 est installé un détecteur des déplacements relatifs du chariot 14 par rapport au coulisseau 11 apte à délivrer des signaux représentatifs de ces déplacements en sens et en grandeurs, et qui est ici constitué par un capteur résistif 28 dont le curseur 29 est fixé au chariot 14 par l'intermédiaire d'un bras 31 et dont le corps 30 comportant la piste est fixé au coulisseau 11, les signaux émis par ce détecteur étant par ailleurs également significatifs des variations de la force de palpage appliquée par la touche du palpeur et par effet de compression de l'un des deux ressorts 16 sur la pièce à mesurer, lors du processus de prise de mesure.

En ce qui concerne la détection des déplacements du coulisseau 11 le long de la glissière verticale 7 de la colonne dans la direction de l'axe de mesure Z, et qui n'est pas directement liée au problème auquel se rapporte l'invention, un exemple est donné ici pour la bonne compréhension du processus de mesure appliqué à l'aide d'une telle colonne.

Pour assurer cette détection, le coulisseau 11 du dispositif de palpage est associé à un dispositif de détection linéaire comportant un organe sensible aux déplacements de ce coulisseau le long de la glissière 7 qui est constitué par un système incrémental optoélectronique de type usuel composé d'une règle graduée 32 fixée en position parallèle à la glissière 7 et à l'intérieur de celle-ci et d'un capteur opto-électronique 33 constituant l'organe sensible de ce système, fixé audit coulisseau 11.

Le déplacement du coulisseau 11 du dispositif de palpage le long de la glissière 7 de la colonne est obtenu d'une part et pour une avance rapide par le moyen d'un volant de manoeuvre 34 (fig. 1), et d'autre part pour un réglage fin à l'aide d'un bouton 35 d'entraînement à vis tangente du volant, et ceci par l'intermédiaire d'un système de transmission du type à poulies et courroie sans fin, non visible sur le dessin, actionné par le volant 34.

La colonne de mesure comporte en outre, fixé contre le bâti 6, un pupitre 36 de commande contenant un circuit électronique relié aux détecteurs 28 et 33 du dispositif de palpage et prévu, en ce qui concerne directement l'invention, pour contrôler un processus préétabli de saisie de la mesure et de détection du point de rebroussement du palpeur 26 lors du palpage des points diamétralement opposés de l'arbre 5 ou de l'alésage 4 de la pièce à mesurer 3 en fonction des variations de l'amplitude relative des signaux en provenance du détecteur 28 du dispositif de palpage.

Ce circuit électronique, dont un exemple de réalisation est donné par le schéma fonctionnel de la figure 6 comporte, relié au capteur résistif 28 du dispositif de palpage, un amplificateur 38 des signaux émis par ce capteur dont la sortie analogique est reliée à un convertisseur analogique-digital 39 d'une part directement par une liaison 40 et d'autre part par l'intermédiaire d'un détecteur de rebroussement 41. Le convertisseur 39 est relié à un processeur 42 programmé en fonction du processus de mesure choisi et informé par un calculateur 43 en termes digitaux résultant du traitement des signaux en provenance du convertisseur 39.

Dans cette première branche du circuit électronique de contrôle, le détecteur de rebroussement 41 est prévu pour délivrer un signal significatif, dans la détection des variations des signaux en provenance du capteur 28, du passage de ces signaux par une valeur maximale ou minimale de leur amplitude.

Sont ensuite reliés au processeur 42 et par l'intermédiaire de "latches" 44 et 45 d'une part le moteur 22 et d'autre part le tableau signalétique 37.

Sur ce schéma sont également représentées en traits interrompus les liaisons mécaniques entre la touche de mesure 27 du palpeur 26 et le moteur 22 qui commande ses déplacements dans les deux sens de la direction X perpendiculaire à celle de l'axe de mesure Z, et entre le support 14 sur lequel est fixé ce moteur 22 et le curseur du capteur résistif 28 qui est sollicité dans la direction de cet axe de mesure Z pendant le parcours d'exploration de la surface cylindrique de l'alésage 4 par la touche de mesure.

Ce circuit électronique alimente à la fois les éléments de signalisation du tableau 37 et le moteur électrique pas-à-pas 22.

En ce qui concerne le moteur 22, le circuit électronique est programmé pour constituer un circuit de pilotage des déplacements du chariot 14 sur le coulisseau 11 par asservissement aux variations du signal en provenance du détecteur 28 pour amener et arrêter ce support à une position pour laquelle l'amplitude relative dudit signal passe par une valeur minimale ou maximale selon le processus de saisie de la cote des points diamétralement opposés de l'arbre 5 ou de l'alésage 4, et significative de la position du point de rebroussement du palpeur, cette valeur étant détectée par le détecteur de rebroussement 41.

En complément de ce circuit électronique spécifique à l'invention sont également représentés en traits fins les liaisons entre le capteur incrémental opto-électronique 33 et le processeur 42, par l'intermédiaire d'un multiplicateur de signal 46 et d'un compteur haut-bas 47, et qui fournissent au calculateur 43 les données nécessaires au calcul de la cote z d'un élément de la pièce à mesurer par intégration dans ce calcul de l'écart de position entre la touche du palpeur et ce capteur opto-électronique qui est donné par le capteur résistif 28.

En ce qui concerne le tableau signalétique 37, celui-ci comporte quatre symboles géométriques 48, 49, 50 et 51 différenciés par leurs formes, leurs orientations et leurs couleurs et dont l'éclairement, commandé par le processeur 42, est significatif pour chacun d'eux d'une phase particulière du processus de prise de mesure dépendant des variations de la force de palpage ellemême dépendante des variations de l'amplitude du signal en provenance du capteur 28, dans les deux sens des déplacements du chariot 14 de part et d'autre de sa position de repos.

Ces symboles présentent deux flèches 48 et 49 de sens contraire et de même couleur, disposées l'une au-dessus et l'autre au-dessous d'un troisième symbole rectangulaire 50 de couleur différente et au-dessous duquel est placé un quatrième symbole en forme de quille couchée de couleur également différente, symbolisant la touche de mesure du palpeur.

L'éclairement des deux premiers symboles 48 et 49 en forme de flèches est significatif du sens du déplacement du chariot 14 sur le coulisseau 11 dans la direction de l'axe de coordonnées de mesure Z.

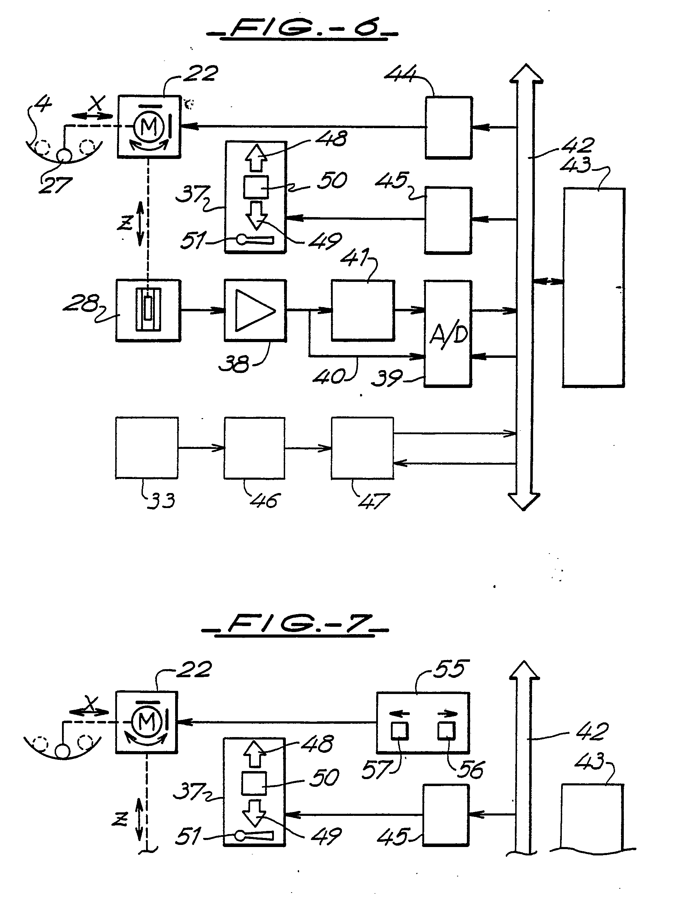

L'éclairement du troisième symbole de forme rectangulaire 50 est significatif de l'arrivée du chariot dans une zone prédéterminée de ses déplacements dans chacun des deux sens de ceux-ci par rapport à sa position de repos. L'étendue de cette zone correspond à l'étendue d'une fourchette de valeurs de la force de palpage qui sont choisies et utilisées pour la recherche du point de rebroussement sans déclencher la prise de mesure. La largeur de cette zone de recherche est représentée sur la figure 5 par la cote z séparant les deux positions AOA1, respectivement AO—A2, de la touche du palpeur 27 dans la direction de l'axe de mesure Z et qui correspond à un déplacement x de cette touche entre ces deux positions dans la direction X perpendiculaire à cet axe de mesure Z pendant l'exploration de la partie basse de la surface cylindrique de l'alésage 4.

L'éclairement du quatrième symbole 51 représentant la touche de mesure est significatif de l'arrivée du chariot, et dans chacun des deux sens de ses déplacements par rapport à sa position de repos, à une position préétablie de déclenchement de la prise de mesure et qui correspond à une force de palpage supérieure à celles obtenues à l'intérieur de la fourchette précitée.

Afin d'attirer encore davantage l'attention de l'opérateur pendant la première phase du processus de prise de mesure qui consiste à régler la force de palpage appliquée par la touche du palpeur au voisinage du point bas ou haut d'un alésage ou d'un arbre à mesurer, les deux premiers symboles 48 et 49 sont éclairés par clignotement pour une position du chariot située hors de la zone de recherche du point de rebroussement et qui est significative d'une insuffisance ou d'un excès de la force de palpage, et la fréquence de ce clignotement est proportionnelle au décroissement de l'erreur de cette force, tout ceci étant évidemment obtenu par programmation du processeur 42.

De cette manière et par sa différence de conception par rapport à l'échelle graduée du cadran d'un galvanomètre qui est d'utilisation courante, ce tableau signalétique 37 supprime tout risque d'erreur de lecture et dispense de suivre attentivement les déplacements d'une aiguille sur une échelle graduée. En outre le jeu de l'éclairement des quatre symboles nettement différenciés libère l'opérateur de toute hésitation quant à l'interprétation des phénomènes qu'ils signalent et qu'il peut ainsi contrôler aisément.

Bien entendu cela n'exclut pas pour autant l'utilisation d'un cadran à échelle graduée pour atteindre le but de l'invention.

La forme d'exécution qui vient d'être décrite de l'objet de l'invention ajoute l'intérêt de l'automatisation de la dernière phase de recherche du point de rebroussement du palpeur à l'avantage de ne devoir déplacer que le support porte-touche sur le chariot pendant cette recherche. En effet l'opérateur, après avoir réglé la force de palpage et passé le point de rebroussement pour s'assurer de la suffisance de celle-ci, n'a plus qu'à déclencher le cycle de recherche automatique dudit point de rebroussement, à l'aide par exemple d'un bouton poussoir situé sur le pupitre de commande 36 de la machine, et à contrôler le tableau signalétique 37 qui lui indique par l'éclairement du symbole rectangulaire 50 et l'extinction des deux flèches 48 et 49 que le palpeur est immobilisé au point recherché. Il n'a plus alors qu'à agir sur le bouton 35 de réglage fin ou la manivelle 34 pour augmenter la force de palpage jusqu'à atteindre la valeur de déclenchement de la prise de mesure, dont l'obtention lui est signalée par l'éclairement du quatrième symbole 51.

Il faut noter ici qu'à la fin de chaque processus de mesure de ce genre, le support 19 ne se trouve plus en position initiale de départ le long des glissières 20, sauf bien sûr dans le cas exceptionnel et non recherché dans lequel l'opérateur immobilise la colonne sur la table de mesure exactement au point de rebroussement AO de la touche 27 du palpeur.

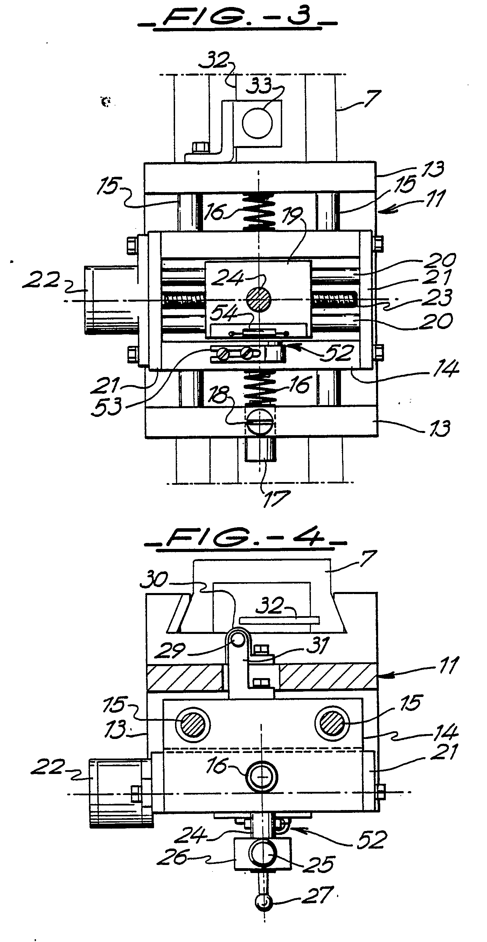

Il est donc nécessaire avant d'entamer un nouveau processus de mesure de replacer le support 19 à sa position initiale de départ, par exemple à mi-course totale, comme représenté figures 3 et 4, afin de ne pas limiter dans un sens ou dans l'autre la course disponible pour la prochaine recherche automatique.

Ce retour à la position initiale peut se faire de diverses manières, en particulier par restitution dans le circuit d'asservissement du moteur 22 de la valeur mémorisée du déplacement du support 19 depuis sa position initiale de départ jusqu'à sa position de détection du point de rebroussement, restitution basée par exemple sur le nombre de pas effectué par ce-moteur pas-à-pas dans le seul sens de ce déplacement (cote x de la figure 5), ou sur la vitesse de déplacement du curseur 29 sur la piste du capteur résistif 28.

Un autre moyen est montré sur le dessin. Il est constitué par un capteur à effet de Hall 52 dont l'aimant est fixé sur un support 53 monté réglable en position sur le chariot 14 et dont l'élément sensible 54 est fixé sur le support 19, cet aimant et cet élément sensible étant situés en regard l'un de l'autre. A la fin du processus de mesure, l'alimentation du moteur 22 est contrôlée par ce capteur pour ramener le support 19 à sa position initiale de départ pré-réglée par le positionnement de l'aimant sur le chariot 14.

Dans une variante du dispositif de commande des déplacements et de l'immobilisation du support 19 et qui est représentée schématiquement par la figure 7, le moteur 22 n'est plus asservi au circuit électronique mais commandé directement par un dispositif presse-boutons 55 présentant deux boutons de commande droite-gauche 56 et 57 dont l'actionnement respectif déclenche des pas d'avance dans le sens choisi dont le nombre est proportionnel au temps d'actionnement et dont l'arrêt est provoqué par le relâchement de ces boutons.

Dans cette variante simplifiée et économique, c'est l'opérateur qui recherche le point de rebroussement en actionnant le dispositif presse-boutons et en se guidant sur la signalisation du tableau 37. Par le même moyen et avant d'entamer un nouveau processus de prise de mesure, l'opérateur peut et doit ramener le support 19 à sa position initiale de départ sur le chariot 14, à vue et sans l'aide d'un dispositif additionnel tel que le capteur à effet de Hall mentionné précédemment.

Dans une variante non représentée mais facile à concevoir, encore plus économique et d'une grande simplicité, le moteur d'actionnement 22 de la vis 23 est remplacé par une manivelle destinée à être actionnée par l'opérateur. En fait tout système de commande de déplacement et d'immobilisation peut être appliqué ici, manuel ou motorisé, tel que par exemple un entraînement roue dentéecrémaillère, sans sortir du cadre de l'invention et sans pour autant en perdre l'avantage essentiel de l'immobilité de la colonne sur la table de mesure dans la dernière phase de recherche du point de rebroussement du palpeur.

L'invention serait applicable avec encore plus d'intérêt aux colonnes de mesure de hauteurs non équipées de dispositifs de sustentation par coussin d'air.

Elle est applicable également aux colonnes de mesure de hauteur sur lesquelles le capteur des déplacements du dispositif de palpage le long de la glissière 7 est d'un autre type que le capteur incrémental optoélectronique mentionné et placé ailleurs que sur le coulisseau 11, ce capteur n'entrant pas en compte dans le cadre strict de l'invention.

Enfin l'invention est évidemment applicable à tout appareil autonome de mesure de grandeurs linéaires, autre que la colonne de mesure de hauteurs donnée en exemple, et dont le plan de référence est oblique.

## Revendications

1. Dispositif de palpage pour un appareil autonome de mesure de grandeurs linéaires destiné à mesurer par référence à un plan (2) et selon un axe de mesure (Z) perpendiculaire à ce plan une pièce (3) immobilisée par rapport audit plan, et comportant un coulisseau (11) destiné à être monté mobile le long d'une glissière (7) rectiligne de l'appareil de mesure (1) qui est déplaçable sur le plan et orientée dans la direction de l'axe de mesure (2), un chariot (14) déplaçable par translation dans cette même direction sur le coulisseau (11) et à l'encontre des forces antagonistes de deux ressorts (16) le maintenant en position de repos entre deux appuis (13) fixes du coulisseau, un palpeur (26) à touche (27) de mesure lié spatialement aux déplacements du chariot (19) sur le coulisseau (11) et destiné à palper sous une force de palpage choisie un élément de la pièce (3) à mesurer par déplacement du chariot (14) à l'encontre de la force de réaction de l'un des deux ressorts (16), un détecteur (28) des déplacements relatifs du chariot (19) par rapport au coulisseau (11) apte à délivrer des signaux représentatifs de ces déplacements en sens et en amplitude et significatifs des variations de la force de palpage, et un circuit électronique relié au détecteur (28) et prévu pour contrôler un processus préétabli de saisie de la mesure et de détection du point de rebroussement du palpeur (26) lors du palpage des points diamètralement opposés d'un arbre (5) ou d'un alésage (4) de la pièce (3) à mesurer en fonction des variations de l'amplitude relative des signaux du détecteur (28), et comportant un tableau signalétique (37) de ces variations, caractérisé en ce que le palpeur (26) est fixé sur un support (19) monté déplaçable sur le chariot (14) par translation dans le plan de mesure et dans une direction (X) perpendiculaire à celle des déplacements du chariot par rapport au coulisseau (11), et en ce que ce support (19) comporte un dispositif de commande (22, 23) de ses déplacements et de son immobilisation sur le chariot (14).

2. Dispositif selon la revendication 1, caractérisé en ce que le dispositif de commande (22, 23) des déplacements du support (19) sur le chariot (14) comporte un moteur (22) d'entraînement de ce support (19) dans les deux sens de la direction de ses déplacements.

3. Dispositif selon la revendication 2, caractérisé en ce que le dispositif de commande (22, 23) des déplacements du support comporte un dispositif presse-bouton (55) de contrôle de marche et d'arrêt du moteur d'entraînement (22) du support dans les deux sens de la direction des déplacements de ce dernier.

4. Dispositif selon la revendication 2, caractérisé en ce que le moteur (22) du dispositif d'entraînement du support est un moteur pas-à-pas alimenté par un circuit de pilotage (38... 44) des déplacements dudit support (19) asservi aux variations du signal en provenance du détecteur (28) pour amener et arrêter ce support (19) à une position pour laquelle l'amplitude relative dudit signal passe par une valeur minimale ou maximale selon le processus de saisie de la mesure d'un arbre (5) ou d'un alésage (4) et significative de la position du point de rebroussement (AO) de la touche (27) du palpeur (26).

5. Dispositif de palpage pour un appareil autonome de mesure de grandeurs linéaires destiné à mesurer par référence à un plan (2) et selon un axe de mesure (Z) perpendiculaire à ce plan une pièce (3) immobilisée par rapport audit plan, et comportant un coulisseau (11) destiné à être monté mobile le long d'une glissière (7) rectiligne de l'appareil de mesure (1) qui est déplaçable sur le plan et orientée dans la direction de l'axe de mesure (Z), un chariot (14) déplaçable par translation dans cette même direction sur le coulisseau (11) et à l'encontre des forces antagonistes de deux ressorts (16) le maintenant en position de repos entre deux appuis (13) fixes du coulisseau, un palpeur (26) à touche (27) de mesure lié spatialement aux déplacements du chariot (14) sur le coulisseau et destiné à palper sous une force de palpage choisie un élément de la pièce à mesurer par déplacement du chariot à l'encontre de la force de réaction de l'un des deux ressorts (16), un détecteur (28) des déplacements relatifs du chariot par rapport au coulisseau (11) apte à délivrer des signaux représentatifs de ces déplacements en sens et en amplitude et significatifs des variations de la force de palpage, et un circuit électronique relié au détecteur (28) et prévu pour contrôler un processus préétabli de saisie de la mesure et de détection du point de rebroussement du palpeur (26) lors du palpage des points diamètralement opposés d'un arbre (5) ou d'un alésage (4) de la pièce (3) à mesurer en fonction des variations de l'amplitude relative des signaux du détecteur (28), et comportant un tableau signalétique (37) de ces variations, caractérisé en ce que le palpeur (26) est fixé sur un support (19) monté déplaçable sur le chariot (14) par translation dans le plan de mesure et dans une direction (X) perpendiculaire à celle des déplacements du chariot (14) par rapport au coulisseau (11), en ce que ce support (19) comporte un dispositif de commande (22, 23) de ses déplacements et de son immobilisation sur le chariot (14), et en ce que le tableau signalétique (37) des variations du signal en provenance du détecteur (28) comporte quatre symboles géométriques (48, 49, 50, 51) différenciés par leur forme, leur orientation et/ou leur couleur et dont l'éclairement, commandé par le circuit électronique relié au détecteur (28), est significatif pour deux premiers symboles (48, 49) du sens du déplacement du chariot (14) sur le coulisseau (11) dans la direction de l'axe de mesure (Z), pour le troisième symbole (50) de l'arrivée dudit chariot (14) dans une zone prédéterminée de ses déplacements dans chacun des deux sens de ceux-ci par rapport à sa position de repos, l'étendue de cette zone étant comprise dans une fourchette de valeurs de la force de palpage choisie pour la recherche du point de rebroussement (AO), et pour le quatrième symbole (51) de l'arrivée de ce même chariot (14) et dans chacun des deux sens de ses déplacements à une position préétablie de déclenchement de la prise de mesure, hors de la zone susdite et correspondant à la force de palpage choisie pour ce déclenchement.

6. Dispositif selon la revendication 5, caractérisé en ce que les deux premiers symboles géométriques (48, 49) sont éclairés par clignotement pour une position du chariot (14) située hors de la zone de recherche du point de rebroussement (AO) et significative d'une insuffisance ou d'un excès de la force de palpage, et en ce que la fréquence de ce clignotement est proportionnelle au décrois- sement de l'erreur de cette force.

**Patentansprüche**

1. Abtastvorrichtung für einen unabhängigen Apparat zum Messen linearer Größen, der dazu bestimmt ist, in bezug auf eine Ebene (2) entlang einer zu dieser Ebene senkrechten Meßachse (Z) ein auf dieser Ebene unbewegliches Stück (3) zu vermessen, die einen Gleitkörper (11) aufweist, der entlang einer geraden, in Richtung der Meßachse (Z) gerichteten Gleitführung (7) des auf der Ebene beweglichen Meßapparates (1) verschiebbar ist, einen Schlitten (14), der in der gleichen Richtung auf dem Gleitkörper (11) gegen die gegeneinanderwirkenden Kräfte zweier Federn (16), die den Schlitten in Ruhestellung zwischen zwei feststehenden Auflagern (13) des Gleitkörpers halten, verschiebbar ist, einen Taster (26) mit Meßspitze (27), der räumlich an die Verschiebungen des Schlittens (14) auf dem Gleitkörper (11) gebunden ist und der dazu bestimmt ist, mit einer vorbestimmten Abtastkraft ein Element des zu vermessenden Stückes (3) durch Verschieben des Schlittens (14) gegen die Reaktionskraft einer der beiden Federn (16) abzutasten, einen Fühler (28) für die Relativverschiebungen des Schlittens (14) gegenüber dem Gleitkörper (11), der befähigt ist, Signale abzugeben, die für diese Verschiebungen in Richtung und Amplitude repräsentativ und für die Veränderungen der Abtastkraft kennzeichnend sind, und einen elektronischen Kreis, der mit dem Fühler (28) verbunden ist und der zum Kontrollieren eines vorbestimmten Prozesses der Meßdaten-Erfassung und des Fühlens des Umkehrpunktes des Tasters (26) während des Abtastens von diametral gegenüberliegenden Punkten einer Welle (5) oder Bohrung (4) des zu vermessenden Stückes (3) als Funktion der Variationen der relativen Amplitude der Signale des Fühlers (28) vorgesehen ist, und der eine Anzeigetafel (37) für diese Variationen aufweist,

dadurch gekennzeichnet, daß der Taster (26) auf einem Halter (19) befestigt ist, der auf dem Schlitten (14) in der Meßebene und in einer zur Richtung der Verschiebung des Schlittens in bezug auf den Gleitkörper (11) senkrechten Richtung (X) verschiebbar angeordnet ist, und daß dieser Halter (19) eine Steuervorrichtung (22, 23) aufweist für seine Verschiebungen und seine Stillsetzung auf dem Schlitten (14).

2. Vorrichtung nach Anspruch 1, dadurch gekennzeichnet, daß die Steuervorrichtung (22, 23) für die Verschiebung des Halters (19) auf dem Schlitten (14) einen Motor (22) für den Antrieb dieses Halters (19) in beiden Richtungen seiner Verschiebungen aufweist.

3. Vorrichtung nach Anspruch 2, dadurch gekennzeichnet, daß die Steuervorrichtung (22, 23) für die Verschiebungen des Halters eine Druckknopf-Vorrichtung (55) zur Kontrolle von Lauf und Stillstand des Antriebsmotors (22) des Halters in seinen beiden Verschiebungsrichtungen umfaßt.

4. Vorrichtung nach Anspruch 2, dadurch gekennzeichnet, daß der Motor (22) der Antriebsvorrichtung des Halters ein Schrittmotor ist, der von einem Stromkreis (38...44) für die Feinsteuerüng der Verschiebungen dieses von den Variationen des von dem Fühler (28) kommenden Signals abhängigen Halters (19) gespeist wird, um diesen Halter (19) in eine Position zu bringen und dort zu arretieren, für welche die relative Amplitude dieses Signals einen minimalen oder maximalen Wert durchläuft, gemäß dem Prozeß der Meßdaten-Erfassung einer Welle (5) oder einer Bohrung (4) und kennzeichnend für die Lage des Umkehrpunktes (AO= der Meßspitze (27) des Tasters (26).

5. Abtastvorrichtung für einen unabhängigen Apparat zum Messen linearer Größen, der dazu bestimmt ist, in bezug auf eine Ebene (2) entlang einer zu dieser Ebene senkrechten Meßachse (Z) ein auf dieser Ebene unbewegliches Stück (3) zu vermessen, die einen Gleitkörper (11) aufweist, der entlang einer geraden, in Richtung der Meßachse (Z) gerichteten Gleitführung (7) des auf der Ebene beweglichen Meßapparates (1) verschiebbar ist, einen Schlitten (14), der in der gleichen Richtung auf dem Gleitkörper (11) gegen die gegeneinanderwirkenden Kräfte zweier Federn (16), die den Schlitten in Ruhestellung zwischen zwei feststehenden Auflagern (13) des Gleitkörpers halten, verschiebbar ist, einen Taster (26) mit Meßspitze (27), der räumlich an die Verschiebungen des Schlittens (14) auf dem Gleitkörper (11) gebunden ist und der dazu bestimmt ist, mit einer vorbestimmten Abtastkraft ein Element des zu vermessenden Stückes (3) durch Verschieben des Schlittens (14) gegen die Reaktionskraft einer der beiden Federn (16) abzutasten, einen Fühler (28) für die Relativverschiebungen des Schlittens (14) gegenüber dem Gleitkörper (11), der befähigt ist, Signale abzugeben, die für diese Verschiebungen in Richtung und Amplitude repräsentativ und für die Veränderungen der Abtastkraft kennzeichnend sind, und einen elektronischen Kreis, der mit dem Fühler (28) verbunden ist und der zum Kontrollieren eines vorbestimmten Prozesses der Meßdaten-Erfassung und des Fühlens des Umkehrpunktes des Tasters (26) während des Abtastens von diametral gegenüberliegenden Punkten einer Welle (5) oder Bohrung (4) des zu vermessenden Stückes (3) als Funktion der Variationen der relativen Amplitude der Signale des Fühlers (28) vorgesehen ist, und der eine Anzeigetafel (37) für diese Variationen aufweist,

dadurch gekennzeichnet, daß der Taster (26) auf einem Halter (19) befestigt ist, der auf dem Schlitten (14) in der Meßebene und in einer zur Richtung der Verschiebung des Schlittens (14) in bezug auf den Gleitkörper (11) senkrechten Richtung (X) verschiebbar angeordnet ist, und daß dieser Halter (19) eine Steuervorrichtung (22, 23) aufweist für seine Verschiebungen und seine Stillsetzung auf dem Schlitten (14) und daß die Anzeigetafel (37) für die Variationen des von dem Fühler (28) ausgehenden Signals vier geometrische Symbole (48, 49, 50, 51) aufweist, die in ihrer Form, ihrer Richtung und/oder ihrer Farbe unterschiedlich sind und deren durch den mit dem Fühler (28) verbundenen elektronischen Kreis gesteuertes Aufleuchten für folgendes kennzeichnend ist: bei den beiden ersten Symbolen (48, 49) für die Verschiebungsrichtung des Schlittens (14) auf dem Gleitkörper (11) in Richtung der Meßachse (Z), bei dem dritten Symbol (50) für das Eintreffen des Schlittens (14) in einer vorbestimmten Zone seiner Verschiebungen in jeder der beiden Richtungen in bezug auf seine Ruhestellung, wobei die Ausdehnung dieser Zone eingeschlossen ist von einer Spanne von Werten der für die Ermittlung des Umkehrpunktes (AO) festgelegten Abtastkraft, und bei dem vierten Symbol (51) für das Eintreffen des Schlittens (14) in jeder seiner beiden Verschiebungsrichtungen in einer vorbestimmten Position des Auslösens des Meßabgriffs, außerhalb der oben genannten Zone und korrespondierend mit der für dieses Auslösen festgelegten Abtastkraft.

6. Vorrichtung nach Anspruch 5, dadurch gekennzeichnet, daß die beiden ersten geometrischen Symbole (48, 49) durch Blinklicht erleuchtet sind für eine Position des Schlittens (14), die sich außerhalb der Zone der Ermittlung des Umkehrpunktes (AO) befindet und die für einen Mangel oder ein Übermaß an Abtastkraft signifikant ist, und daß die Blink-Frequenz proportional zum Abklingen des Fehlers dieser Kraft ist.

**Claims**

1. Sensing device for a self-contained apparatus for measuring linear sizes intended to measure, by reference to a plane (2) and along a measurement axis (Z) perpendicular to this plane, a workpiece (3) which is immobilised relative to said plane, and comprising a slider (11) intended to be movably mounted along a rectilinear slideway (7) of the measuring apparatus (1) which slideway (7) is displaceable on the plane and can be orientated in the route of the measurement axis (Z), a carriage (14) displaceable by translation in this same route on the slider (11) and in opposition to the antagonistic forces of two springs (16) holding it in the rest position between two fixed rests of the slider, a sensor (26) having a measuring probe (27) connected spatially to the displacements of the carriage (14) on the slider (11) and intended to sense, under a selected sensing force, an element of the test piece (3) by displacement of the carriage (14) in opposition to the reaction force of one of the two springs (16), a detector (28) of the relative displacements of the carriage (14) with respect to the slider (11) capable of delivering signals representative of these displacements in direction and in amplitude and indicative of the variations in the sensing force, and an electronic circuit connected to the detector (28) and provided for controlling a predetermined process of acquiring the measurement and detecting the cusp of the sensor (26) during the sensing of diametrally opposed points of a shaft (5) or of a bore (4) of the test piece (3) as a function of the variations in the relative amplitude of the signals from the detector (28), and comprising a chart (37) describing these variations, characterised in that the sensor (26) is fixed on a support (19) displaceably mounted on the carriage (14) by translation in the measurement plane and in a route (X) perpendicular to that of the displacements of the carriage relative to the slider (11), and in that this support (19) comprises a control device (22, 23) controlling its displacements and its immobilisation on the carriage (14).

2. Device according to claim 1, characterised in that the control device (22, 23) controlling the displacements of the support (19) on the carriage (14) comprises a motor (22) for driving this support (19) in both directions of the route of its displacements.

3. Device according to claim 2, characterised in that the control device (22, 23) controlling the displacements of the support comprises a pushbutton device (55) for monitoring the operation and stoppage of the motor (22) driving the support in both directions of the route of the displacements thereof.

4. Device according to claim 2, characterised in that the motor (22) of the device for driving the support is a step-by-step motor supplied by a steering circuit (38 ... 44) for steering the displacements of said support (19) subjected to the variations of the signal originating from the detector (28) for supplying and stopping this support (19) at a position in which the relative amplitude of said signal passes through a value which is a minimum or maximum according to the process for acquiring the measurement of a shaft (5) or a bore (4) and is indicative of the position of the cusp (AO) of the probe (27) of the sensor (26).

5. Sensing device for a self-contained apparatus for measuring linear sizes intended to measure, by reference to a plane (2) and along a measurement axis (Z) perpendicular to this plane, a workpiece (3) which is immobilised relative to said plane, and comprising a slider (11) intended to be movably mounted along a rectilinear slideway (7) of the measuring apparatus (1) which slideway (7) is displaceable on the plane and can be orientated in the route of the measurement axis (Z), a carriage (14) displaceable by translation in this same route on the slider (11) and in opposition to the antagonistic forces of two springs (16) holding it in the rest position between two fixed rests of the slider, a sensor (26) having a measuring probe (27) connected spatially to the displacements of the carriage (14) on the slider (11) and intended to sense, under a selected sensing force, an element of the test piece (3) by displacement of the carriage (14) in opposition to the reaction force of one of the two springs (16), a detector (28) of the relative displacements of the carriage (14) with respect to the slider (11) capable of delivering signals representative of these displacements in direction and in amplitude and indicative of the variations in the sensing force, and an electronic circuit connected to the detector (28) and provided for controlling a predetermined process of acquiring the measurement and detecting the cusp of the sensor (26) during the sensing of diametrally opposed points of a shaft (5) or of a bore (4) of the test piece (3) as a function of the variations in the relative amplitude of the signals from the detector (28), and comprising a chart (37) describing these variations, characterised in that the sensor (26) is fixed on a support (19) displaceably mounted on the carriage (14) by translation in the measurement plane and in a route (X) perpendicular to that of the displacements of the carriage (14) relative to the slider (11), in that this support (19) comprises a control device (22, 23) controlling its displacements and its immobilisation on the carriage (14), and in that the chart (37) describing the variations in the signal originating from the detector (28) comprises four geometric symbols (48, 49, 50, 51) which are differentiated by their shape, their orientation and/or their colour and of which the illumination controlled by the electronic circuit connected to the detector (28) is indicative, in the case of two first symbols (48, 49), of the direction of displacement of the carriage (14) on the slider (11) in the route of the measurement axis (Z), in the case of the third symbol (50), of the entry of said carriage (14) into a predetermined region of its displacement in each of the two directions thereof relative to its rest position, the span of this region being contained in a range of values of the sensing force selected for searching the cusp (AO), and, in the case of the fourth symbol (51), of the arrival of this same carriage (14) and in each of the two directions of its displacements at a predetermined position for triggering the taking of measurements, outside the above-mentioned region and corresponding to the sensing force selected for this triggering operation.

6. Device according to claim 5, characterised in that the first two geometric symbols (48, 49) are illuminated by flashing when the carriage (14) is located in a position outside the region for searching the cusp (AO) and indicative of an inadequacy or an excess of sensing force, and in that the frequency of this flashing is proportional to the decrease of the error in this force.

_FIG.-1_

_FIG.-2_

_FIG.-5_

EP 0 243 693 B1

_FIG. - 3_

_FIG. - 4_

2

_FIG.-6_

_FIG.-7_